# EUROPEAN PATENT APPLICATION

(11) **EP 4 741 813 A1**
(43) Date of publication of application: **13.05.2026**
(21) Application number: 24835780.8
(22) Date of filing: 01.05.2024
(51) Int. Cl.: G01N 27/62

(54) **ANALYSIS METHOD USING LYSOPHOSPHATIDYLCHOLINE COMPOUND CONTAINING STABLE ISOTOPE ELEMENT IN CHOLINE MOIETY**

(30) Priority: 03.07.2023 JP 2023109202
(71) Applicant: SHIMADZU CORPORATION, Kyoto-shi, Kyoto 604-8511 (JP)
(72) Inventor: FUJIMURA, Daiki, Kyoto-shi, Kyoto 604-8511 (JP); YAMAKI, Satoshi, Kyoto-shi, Kyoto 604-8511 (JP); YAMADA, Masaki, Kyoto-shi, Kyoto 604-8511 (JP); MATSUMOTO, Keiko, Kyoto-shi, Kyoto 604-8511 (JP)
(74) Representative: Müller-Boré & Partner Patentanwälte PartG mbB
(86) International application number: PCT/JP2024/016790
(87) International publication number: WO 2025/009258

(57) **Abstract**

A technology capable of analyzing lysophosphatidylcholine and lysophosphatidic acid in cerebrospinal fluid with high accuracy can be developed by a method, which is an analytical method including a step of detecting at least one of lysophosphatidylcholine and lysophosphatidic acid in a biological sample by mass spectrometry, wherein a lysophosphatidylcholine compound containing a stable isotope element in the choline moiety is used as a standard sample.

## Description

### TECHNICAL FIELD

The present invention relates to an analytical method using a lysophosphatidylcholine compound containing a stable isotope element in the choline moiety.

### BACKGROUND ART

As a method for objectively evaluating pain, which is a subjective measure, for example, Japanese Unexamined Patent Application Publication No. 2017-187492 proposes a method for detecting at least one of lysophosphatidylcholine (LPC) and lysophosphatidic acid (LPA) in a sample derived from human cerebrospinal fluid. In this method, specific examples of lysophosphatidylcholine include one or more selected from LPC_14_0, LPC_16_0, LPC_16_1, LPC_18_0, LPC_18_1, LPC_18_2, LPC_20_4, LPC_20_5, and LPC_22_6, and specific examples of lysophosphatidic acid include one or more selected from total LPA, LPA_16_0, LPA_18_0, LPA_18_1, LPA_18_2, LPA_20_4, and LPA_22_6. Here, in the specific examples of LPC and LPA, the first number indicates the number of carbon atoms in the fatty acid chain, and the second number indicates the number of double bonds in the fatty acid chain.

Conventionally, when detecting lysophosphatidylcholine and lysophosphatidic acid by mass spectrometry (MS), LPA_17_0 (stable isotope is unlabeled) represented by the following structure, which is not present in biological samples, has been used as a standard sample.

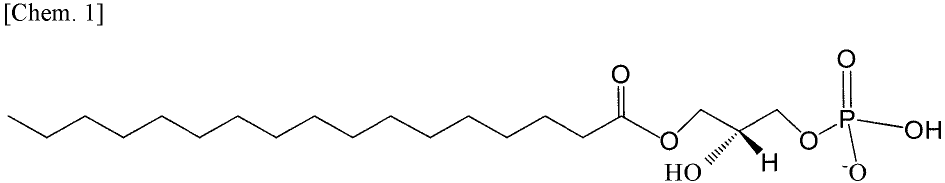

However, in recent years, it has been found that LPA_17_0 may be slightly contained depending on the person, and even when quantification is performed using LPA_17_0 as a standard sample, there has been a problem with its accuracy. To solve this problem, for example, it has been proposed to use a lysophosphatidylcholine compound (18:1-d7 Lyso PC / C₂₆H₄₅D₇NO₇P) represented by the following structure, into which a stable isotope element has been introduced, as a standard sample.

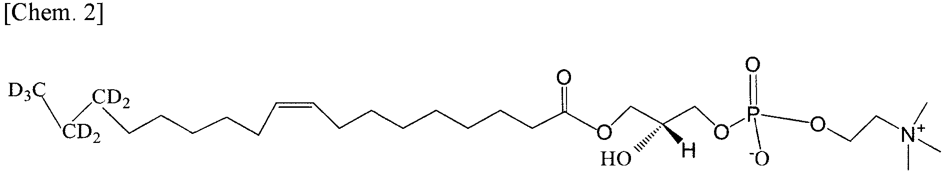

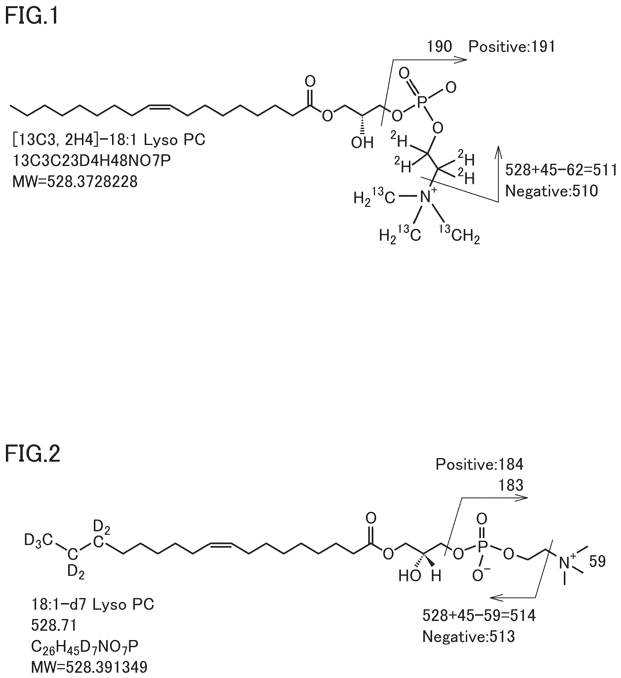

However, as shown in FIG. 2, this lysophosphatidylcholine compound is ionized at the moiety adjacent to the phosphate group during MS analysis, generating a product ion of m/z = 184. This product ion has the same mass as the product ion of LPC, and their retention times are close. Therefore, if the product ion to be selected is set to m/z = 184, crosstalk (a phenomenon in which ions stagnate in the collision cell, and the product ion of the measurement component is erroneously detected) occurs, and an improvement in quantitative accuracy has been demanded.

### PRIOR ART DOCUMENTS

### PATENT DOCUMENTS

Patent Document 1: Japanese Unexamined Patent Application Publication No. 2017-187492

### SUMMARY OF INVENTION

### PROBLEM TO BE SOLVED BY THE INVENTION

An object of the present invention is to solve the above problems and to develop a technology capable of analyzing lysophosphatidylcholine and lysophosphatidic acid in cerebrospinal fluid with high accuracy.

### MEANS FOR SOLVING THE PROBLEM

A first aspect of the present invention relates to an analytical method including a step of detecting at least one of lysophosphatidylcholine and lysophosphatidic acid in a biological sample by mass spectrometry, wherein a lysophosphatidylcholine compound containing a stable isotope element in the choline moiety is used as a standard sample.

### EFFECTS OF INVENTION

According to the analytical method of the present invention, quantitative accuracy can be improved by using a compound that does not exist in vivo as a standard sample. Furthermore, according to the analytical method of the present invention, by using a lysophosphatidylcholine compound containing a stable isotope element in the choline moiety as a standard sample, contamination to the detection target and crosstalk in mass spectrometry can be avoided, and quantitative accuracy can be improved.

### BRIEF DESCRIPTION OF DRAWINGS

[FIG. 1] FIG. 1 is a diagram showing a particularly preferable example of a lysophosphatidylcholine compound used as a labeled sample in the first aspect of the present invention.
[FIG. 2] FIG. 2 is a diagram showing a conventional lysophosphatidylcholine compound into which a stable isotope element has been introduced.

### DESCRIPTION OF EMBODIMENTS

A first aspect of the present invention is an analytical method including a step of detecting at least one of lysophosphatidylcholine and lysophosphatidic acid in a biological sample by mass spectrometry, wherein a lysophosphatidylcholine compound containing a stable isotope element in the choline moiety is used as a standard sample.

In the first aspect of the present invention, quantitative accuracy can be improved by using a lysophosphatidylcholine compound containing a stable isotope element that does not exist in vivo as a standard sample. However, where the stable isotope element is contained in the lysophosphatidylcholine compound may cause a large difference in quantitative accuracy. In the first aspect of the present invention, by introducing a stable isotope element into the choline moiety adjacent to the phosphate group of lysophosphatidylcholine for labeling, contamination to the detection target and crosstalk in mass spectrometry can be avoided, and quantitative accuracy can be improved.

The stable isotope element used in the first aspect of the present invention may be a stable isotope element of an atom constituting the choline moiety adjacent to the phosphate group of lysophosphatidylcholine, and examples thereof include at least one of deuterium (²H), heavy carbon (¹³C), and heavy nitrogen (¹⁵N). Among these, from the viewpoint of relatively easy production, at least one of deuterium and heavy carbon is preferable, and containing both deuterium and heavy carbon is particularly preferable.

The lysophosphatidylcholine to be the lysophosphatidylcholine compound containing a stable isotope element is preferably selected from LPC_14_0, LPC_16_0, LPC_16_1, LPC_18_0, LPC_18_1, LPC_18_2, LPC_20_4, LPC_20_5, and LPC_22_6 contained in cerebrospinal fluid. Among these, LPC_18_0 or LPC_18_1, whose concentration in cerebrospinal fluid is relatively high, is particularly preferable.

A particularly preferable example of the lysophosphatidylcholine compound containing a stable isotope element is a lysophosphatidylcholine compound ([¹³C3, ²H4]-18:1 Lyso PC / ¹³C3C23D4H48NO7P) represented by the following structure.

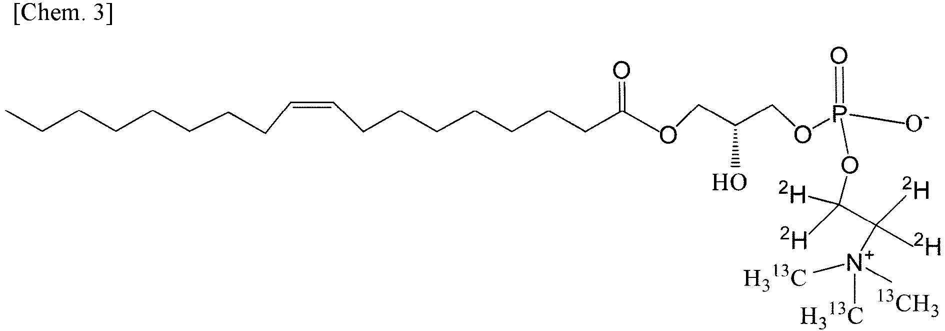

The above lysophosphatidylcholine compound is obtained by introducing and labeling four deuterium atoms and three heavy carbon atoms into the choline moiety of LPC_18_1. When such a lysophosphatidylcholine compound is used as a standard sample to detect lysophosphatidylcholine (e.g., LPC_18_1) contained in a biological sample, the standard sample is ionized at the moiety adjacent to the phosphate group, as shown in FIG. 1, during mass spectrometry, generating a product ion of m/z = 191. Since this product ion from the standard sample has a mass different from m/z = 184, which is the product ion of lysophosphatidylcholine, crosstalk can be avoided.

The detection target in the biological sample may be at least one of lysophosphatidylcholine and lysophosphatidic acid. Specifically, one or more lysophosphatidylcholines selected from LPC_14_0, LPC_16_0, LPC_16_1, LPC_18_0, LPC_18_1, LPC_18_2, LPC_20_4, LPC_20_5, and LPC_22_6, and one or more lysophosphatidic acids selected from total LPA, LPA_16_0, LPA_18_0, LPA_18_1, LPA_18_2, LPA_20_4, and LPA_22_6, as disclosed in Japanese Unexamined Patent Application Publication No. 2017-187492, may be mentioned. In the case of lysophosphatidic acid, a product ion of m/z = 153 is generated, and crosstalk can be avoided in the first place. Therefore, the effect of avoiding crosstalk by including a stable isotope element in the choline moiety is particularly useful when the detection target is lysophosphatidylcholine. When lysophosphatidylcholine is the detection target, LPC_18_0 or LPC_18_1 is particularly preferable among the specific examples described above.

The lysophosphatidylcholine compound containing a stable isotope element can be appropriately synthesized by combining methods known per se, but commercially available lysophosphatidylcholine compounds may, of course, be obtained.

The biological sample is preferably cerebrospinal fluid (human cerebrospinal fluid). Cerebrospinal fluid examination is generally performed in clinical practice for the diagnosis of various diseases, and a trace amount of cerebrospinal fluid collected before implementation of myelography or the like may be used as it is as a biological sample. Furthermore, the biological sample may be used for measuring the concentration of components after being subjected to known pretreatment as necessary.

The mass spectrometry may be, for example, Laser Desorption/Ionization Time Of Flight Mass Spectrometry (LDI-TOF/MS method) or ElectroSpray Ionization-Mass Spectrometry (ESI-MS method).

In the TOF/MS method, the target lipid molecular species can be detected by pattern analysis of the spectrum obtained by a TOF/MS apparatus. By detecting whether or not a peak at a specific m/z value exists, qualitative detection of whether or not the target lipid molecular species exists in the sample can be performed. Quantitative detection is also possible based on the high and low values of the m/z peak of the spectrum. The LDI-TOF/MS may be, for example, Matrix Assisted Laser Desorption/Ionization Time Of Flight Mass Spectrometry (MALDI-TOF/MS method) or Surface-Enhanced Laser Desorption/Ionization Time Of Flight Mass Spectrometry (SELDI-TOF/MS method).

The MALDI-TOF/MS method is an omics analysis method that combines MALDI and TOF/MS. A biological sample is subjected to appropriate pretreatment to prepare an analysis sample, and a matrix solution such as α-cyano-4-hydroxycinnamic acid (CHCA) and dihydroxybenzoic acid (DHB) is added thereto, and the mixture may be applied to a MALDI-TOF/MS system.

The SELDI-TOF/MS method is a protein chip technology that combines SELDI and TOF/MS. A biological sample is subjected to appropriate pretreatment to prepare an analysis sample, the analysis sample is applied to a protein chip to adsorb lipid molecular species onto the chip, and the chip may be loaded into a SELDI-TOF/MS system. In addition to chips on which functional groups such as hydrophobic groups, ion exchange groups, and metal ion-immobilized groups are immobilized, chips on which specific binding molecules (e.g., antibodies, antibody fragments, aptamers, etc.) for the target lipid molecular species are immobilized may be prepared and used.

In the case of the ESI-MS method, it is preferable to use separation means such as high-performance liquid chromatography or gas chromatography directly connected to a mass spectrometer. Since the lipid molecular species of the present invention have a relatively low molecular weight, when detecting lipid molecular species using the ESI-MS method, it is desirable to use the separation means under conditions suitable for separating low-molecular-weight lipid molecular species.

According to the analytical method of the first aspect as described above, quantitative accuracy can be improved by using a compound that does not exist in vivo as a standard sample. Furthermore, by using a lysophosphatidylcholine compound containing a stable isotope element in the choline moiety as a standard sample, contamination to the detection target and crosstalk in mass spectrometry can be avoided, and quantitative accuracy can be improved.

[Aspects] It will be understood by those skilled in the art that the exemplary embodiments described above are specific examples of the following aspects.

(Item 1) An analytical method according to one aspect is an analytical method including a step of detecting at least one of lysophosphatidylcholine and lysophosphatidic acid in a biological sample by mass spectrometry, wherein a lysophosphatidylcholine compound containing a stable isotope element in the choline moiety is used as a standard sample.

According to the analytical method described in Item 1, quantitative accuracy can be improved by using a compound that does not exist in vivo as a standard sample. Furthermore, according to the analytical method described in Item 1, by using a lysophosphatidylcholine compound containing a stable isotope element in the choline moiety as a standard sample, contamination to the detection target and crosstalk in mass spectrometry can be avoided, and quantitative accuracy can be improved.

(Item 2) In the analytical method according to one aspect, the stable isotope element is at least one of deuterium and heavy carbon.

According to the analytical method described in Item 2, since the stable isotope element is at least one of deuterium and heavy carbon, the lysophosphatidylcholine compound containing a stable isotope element in the choline moiety can be easily produced, as compared with the case of using heavy nitrogen.

(Item 3) In the analytical method according to one aspect, the lysophosphatidylcholine compound containing a stable isotope element in the choline moiety is LPC_18_0 or LPC_18_1 containing a stable isotope element in the choline moiety.

According to the analytical method described in Item 3, quantitative accuracy can be improved by using LPC_18_0 or LPC_18_1 containing a stable isotope element in the choline moiety, which does not exist in vivo, as a standard sample. Furthermore, according to the analytical method described in Item 3, by using LPC _18_0 or LPC_18_1 containing a stable isotope element in the choline moiety as a standard sample, contamination to the detection target and crosstalk in mass spectrometry can be avoided, and quantitative accuracy can be improved.

(Item 4) In the analytical method according to one aspect, the lysophosphatidylcholine compound containing a stable isotope element in the choline moiety has the following structure:

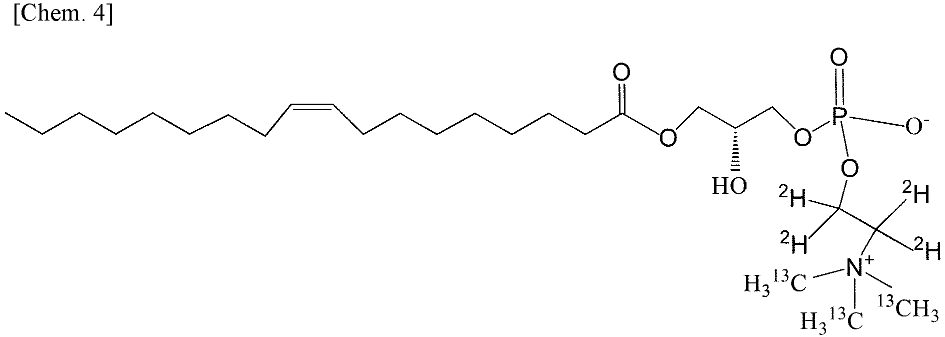

According to the analytical method described in Item 4, quantitative accuracy can be improved by using a lysophosphatidylcholine compound having the above structure and containing a stable isotope element in the choline moiety, which does not exist in vivo, as a standard sample. Furthermore, according to the analytical method described in Item 4, by using the lysophosphatidylcholine compound having the above structure and containing a stable isotope element in the choline moiety as a standard sample, contamination to the detection target and crosstalk in mass spectrometry can be avoided, and quantitative accuracy can be improved.

(Item 5) In the analytical method according to one aspect, lysophosphatidylcholine in the biological sample is detected.

According to the analytical method described in Item 5, lysophosphatidylcholine can be detected with high quantitative accuracy. Furthermore, according to the analytical method described in Item 5, contamination to the detection target and crosstalk in mass spectrometry can be avoided, and lysophosphatidylcholine can be detected with high quantitative accuracy.

(Item 6) In the analytical method according to one aspect, the biological sample is cerebrospinal fluid.

According to the analytical method described in Item 6, lysophosphatidylcholine and lysophosphatidic acid in cerebrospinal fluid can be analyzed with high accuracy.

## Claims

1. An analytical method comprising a step of detecting at least one of lysophosphatidylcholine and lysophosphatidic acid in a biological sample by mass spectrometry, wherein a lysophosphatidylcholine compound containing a stable isotope element in the choline moiety is used as a standard sample.

2. The method according to claim 1, wherein the stable isotope element is at least one of deuterium and heavy carbon.

3. The method according to claim 1 or 2, wherein the lysophosphatidylcholine compound containing a stable isotope element in the choline moiety is LPC_18_0 or LPC_18_1 containing a stable isotope element in the choline moiety.

4. The method according to claim 3, wherein the lysophosphatidylcholine compound containing a stable isotope element in the choline moiety has the following structure:

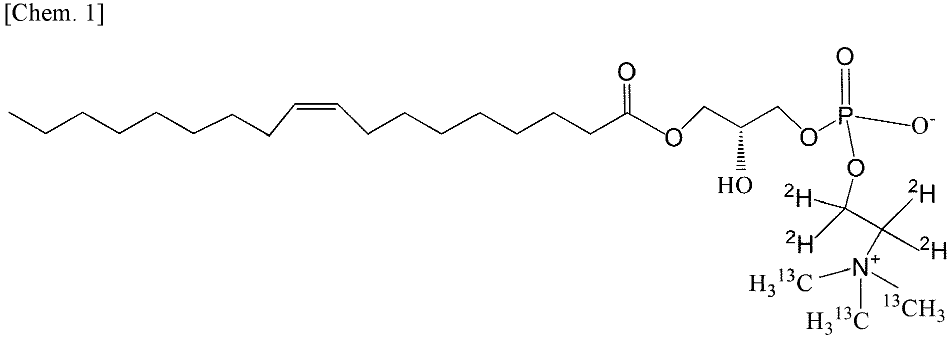

5. The method according to claim 1, wherein lysophosphatidylcholine in the biological sample is detected.

6. The method according to claim 1, wherein the biological sample is cerebrospinal fluid.
